# DEMANDE DE BREVET EUROPEEN

(11) **EP 4 786 337 A1**
(43) Date de publication de la demande: **05.08.2026**
(21) Numéro de dépôt: 26154005.8
(22) Date de dépôt: 26.01.2026
(51) Int. Cl.: B64D 33/02, B64C 23/00, F02C 7/045

(54) **ENSEMBLE DE PROPULSION D' AÉRONEF COMPRENANT AU MOINS UN DISPOSITIF ACTIVABLE D ATTÉNUATION D' ONDES**

(30) Priorité: 29.01.2025 FR 2500938
(71) Demandeur: AIRBUS OPERATIONS (S.A.S.), 31060 Toulouse (FR); Institut Supérieur de l'Aéronautique et de l'Espace, 31400 Toulouse (FR)
(72) Inventeur: BIANCHI, Stefano, 31060 TOULOUSE (FR); GOWREE, Erwin Ricky, 31055 TOULOUSE Cedex 4 (FR)
(74) Mandataire: Fantin, Laurent

(57) **Abrégé**

L'invention a pour objet un ensemble de propulsion d'aéronef comportant au moins un dispositif activable d'atténuation d'ondes qui comprend au moins un système d'analyse (70) configuré pour analyser une première onde (66) produite par une motorisation de l'ensemble de propulsion ou/et au moins une de ses caractéristiques et générer un signal de commande (S76) ainsi qu'au moins un générateur d'ondes (72) configuré pour, à réception du signal de commande (S76), générer au moins une deuxième onde (74) déphasée et en opposition de phase par rapport à la première onde (66).

## Description

La présente demande se rapporte à un ensemble de propulsion d'aéronef comprenant au moins un dispositif activable d'atténuation d'ondes.

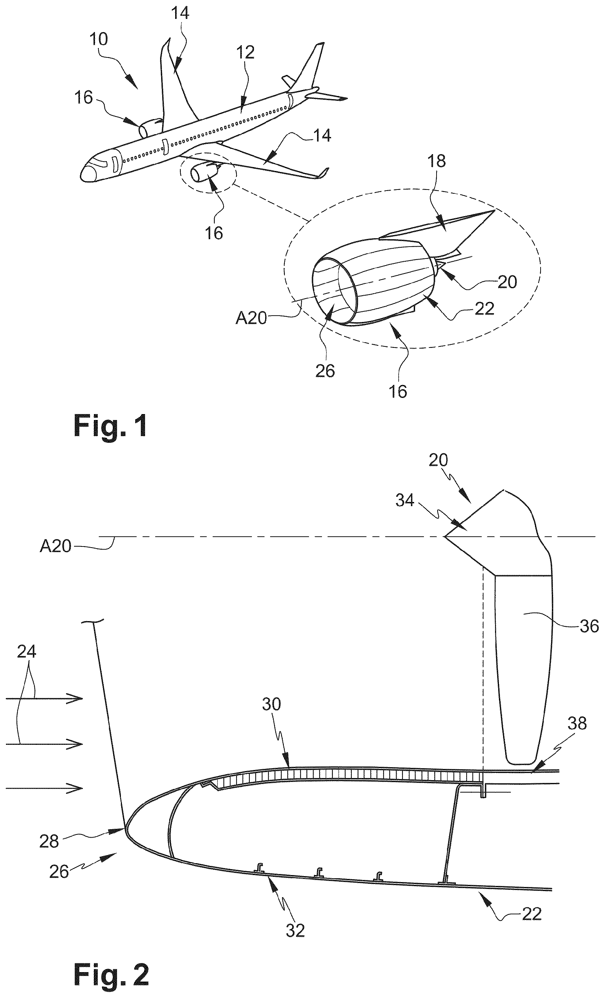

Selon un mode de réalisation visible sur la figure 1, un aéronef 10 comprend un fuselage 12, des ailes 14 positionnées de part et d'autre du fuselage 12 ainsi que des ensembles de propulsion 16 positionnés sous les ailes 14 et reliés à ces dernières par des mâts 18. Chaque ensemble de propulsion 16 comprend une motorisation 20 ainsi qu'une nacelle 22 positionnée autour de la motorisation 20. Cette dernière présente un axe de motorisation A20.

Pour la suite de la description, une direction longitudinale est parallèle à l'axe de motorisation A20 et une direction radiale est perpendiculaire à l'axe de motorisation A20. Un plan longitudinal est un plan contenant l'axe de motorisation A20. Les notions avant/arrière amont/ aval font référence au sens d'écoulement d'un flux d'air 24, qui s'écoule de l'avant vers l'arrière dans la nacelle 22.

Selon un mode de réalisation visible sur la figure 2, la nacelle 22 a une forme approximativement tubulaire et délimite avec la motorisation 20 un conduit annulaire. Cette nacelle 22 comprend à l'avant une entrée d'air 26 via laquelle pénètre le flux d'air 24. Cette entrée d'air 26 comporte une lèvre 28, un premier conduit 30 prolongeant la lèvre 28 vers l'intérieur de la nacelle 22 en direction de la motorisation 20 ainsi qu'une paroi extérieure 32 prolongeant la lèvre 28 vers l'extérieur de la nacelle 22.

La motorisation 20 comprend une soufflante 34 qui comporte un rotor 36 ainsi qu'un deuxième conduit 38 appelé carter de soufflante et positionné autour du rotor 36, dans le prolongement du premier conduit 30.

En fonctionnement, la soufflante 34 génère des vibrations qui se propagent vers l'avant de l'entrée d'air 26 sous la forme d'au moins une première onde acoustique. Cette première onde acoustique est réfléchie au niveau de la lèvre 28 sous la forme d'une deuxième onde acoustique qui se propage vers l'arrière de l'entrée d'air 26, en direction de la soufflante 34.

Cette deuxième onde acoustique peut interagir avec la première onde acoustique et ces première et deuxième ondes acoustiques peuvent accumuler de l'énergie produisant un effet de résonance sur les pales du rotor de la soufflante 34, ce qui peut entraîner une défaillance mécanique.

La présente invention vise à remédier à tout ou partie des inconvénients de l'art antérieur. A cet effet, l'invention a pour objet un ensemble de propulsion d'aéronef comportant une motorisation capable de générer au moins une première onde ainsi qu'au moins une surface aérodynamique sur laquelle se propage ladite première onde, caractérisé en ce que l'ensemble de propulsion comprend au moins un dispositif activable d'atténuation d'ondes comportant au moins un système d'analyse configuré pour analyser la première onde ou/et au moins une de ses caractéristiques et générer un signal de commande ainsi qu'au moins un générateur d'ondes configuré pour, à réception du signal de commande, générer au moins une deuxième onde déphasée et en opposition de phase par rapport à la première onde. En complément, le générateur d'ondes comprend au moins un élément en matériau à mémoire de forme ou à géométrie variable positionné au niveau de la surface aérodynamique de l'ensemble de propulsion, cet élément en matériau à mémoire de forme ou à géométrie variable présentant une première géométrie lorsque le générateur d'ondes ne reçoit pas le signal de commande et une deuxième géométrie lorsque le générateur d'ondes reçoit le signal de commande, la deuxième géométrie de l'élément en matériau à mémoire de forme ou à géométrie variable étant configurée pour réfléchir la première onde en la deuxième onde. Le déphasage des première et deuxième ondes acoustiques permet de limiter ou d'empêcher un phénomène de résonance sur les pales du rotor de la soufflante, limitant les risques de défaillances mécaniques.

Selon une autre caractéristique, l'ensemble de propulsion comprend une entrée d'air présentant au moins une surface aérodynamique ainsi qu'au moins un capteur, configuré pour capter la première onde, situé dans la motorisation et/ou dans l'entrée d'air, au niveau ou à proximité de la surface aérodynamique de l'entrée d'air.

Selon une autre caractéristique, l'ensemble de propulsion comprend plusieurs capteurs positionnés dans des zones distinctes de l'ensemble de propulsion.

Selon une autre caractéristique, le capteur et le système d'analyse forment un unique élément configuré pour capter la première onde, la transformer en signal de commande et transmettre ledit signal de commande au générateur d'ondes.

Selon une autre caractéristique, le capteur et le système d'analyse sont des éléments distincts et distants l'un de l'autre, chaque capteur étant configuré pour capter la première onde et la transformer en un premier signal qui est fonction de la première onde, le système d'analyse étant configuré pour générer, à réception du premier signal provenant du capteur, le signal de commande et le transmettre au générateur d'ondes.

Selon une autre caractéristique, l'ensemble de propulsion comprenant une entrée d'air qui comporte une lèvre, un premier conduit prolongeant la lèvre en direction de la motorisation ainsi qu'une zone de jonction reliant la lèvre et le premier conduit, ledit au moins un élément en matériau à mémoire de forme ou à géométrie variable étant situé au niveau de la zone de jonction.

L'invention a également pour objet un aéronef comportant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef et d'un ensemble de propulsion,
- La figure 2 est une coupe longitudinale d'une partie avant d'un ensemble de propulsion illustrant un mode de réalisation de l'art antérieur,
- La figure 3 est une coupe longitudinale d'une partie avant d'un ensemble de propulsion illustrant un mode de réalisation de l'invention,
- La figure 4 est une coupe longitudinale d'une partie avant d'un ensemble de propulsion illustrant un autre mode de réalisation de l'invention.

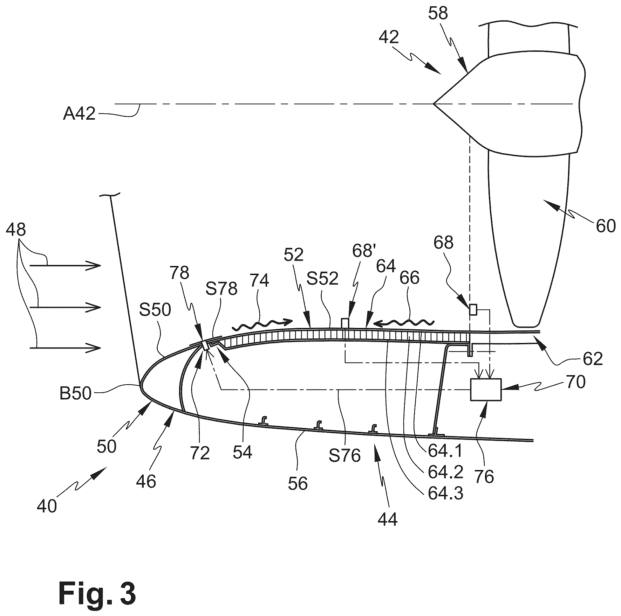

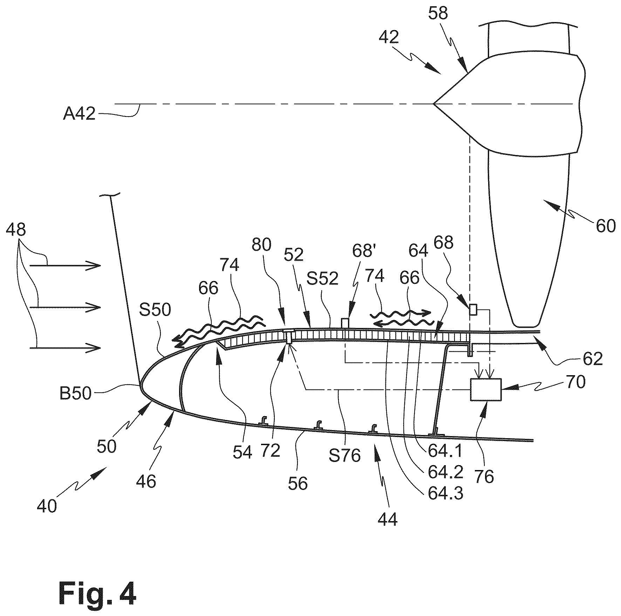

Selon des modes de réalisation visibles sur les figures 3 et 4, un ensemble de propulsion 40 comprend une motorisation 42 présentant un axe de motorisation A42 ainsi qu'une nacelle 44 positionnée autour de la motorisation 42.

La nacelle 44 comprend, à l'avant, une entrée d'air 46 via laquelle pénètre un flux d'air 48. Cette entrée d'air 46 comporte une lèvre 50, un premier conduit 52 prolongeant la lèvre 50 vers l'intérieur de la nacelle 44 en direction de la motorisation 42, une zone de jonction 54 reliant la lèvre 50 et le premier conduit 52 ainsi qu'une paroi extérieure 56 prolongeant la lèvre 50 vers l'extérieur de la nacelle 44. La lèvre 50 présente un bord d'attaque B50 au niveau duquel un flux d'air se sépare en un premier flux d'air pénétrant dans la nacelle 44 et un deuxième flux d'air s'écoulant à l'extérieur de la nacelle 44.

La motorisation 42 comprend une soufflante 58, qui comporte un rotor 60 pourvu de pales, ainsi qu'un deuxième conduit 62 appelé carter de soufflante et positionné autour du rotor 60, dans le prolongement du premier conduit 52.

La motorisation 42 n'est pas plus décrite car elle peut être identique à celle de l'art antérieur. A l'exception de la lèvre 50 et du premier conduit 52, la nacelle 44 n'est pas plus décrite car elle peut être identique à celle de l'art antérieur.

La lèvre 50 et le premier conduit 52 comprennent des parois aérodynamiques qui présentent respectivement des première et deuxième surfaces aérodynamiques S50, S52 canalisant le flux d'air 48 qui pénètre dans la nacelle 44 et contre lesquelles s'écoule ce flux d'air 48. Selon une configuration visible sur les figures 3 et 4, l'ensemble de propulsion 40 comprend au moins un panneau d'atténuation acoustique 64 qui comporte au moins une couche acoustiquement résistive 64.1 présentant une surface aérodynamique, au moins une structure alvéolaire 64.2 ainsi qu'une couche réflectrice 64.3. Selon un agencement, le panneau d'atténuation acoustique 64 est positionné au niveau du premier conduit 52. La surface aérodynamique de la couche acoustiquement résistive 64.1 forme au moins une partie de la deuxième surface aérodynamique S52.

En fonctionnement, la soufflante 58 peut générer des vibrations qui se propagent au niveau ou à proximité des première et deuxième surfaces aérodynamiques S50, S52, vers l'avant de l'entrée d'air 46 et sous la forme d'une première onde acoustique 66.

Selon une particularité, l'ensemble de propulsion 40 comprend au moins un capteur 68 configuré pour capter la première onde acoustique 66, au moins un système d'analyse 70 configuré pour analyser la première onde acoustique 66 ou/et au moins une de ses caractéristiques, au moins un générateur d'ondes 72 configuré pour générer une deuxième onde acoustique 74, en direction de la soufflante 58 et éventuellement en réfléchissant la première onde acoustique 66, déphasée par rapport à la première onde acoustique 66 ainsi qu'une commande 76 configurée pour générer un signal de commande S76, en fonction de l'analyse faite par le système d'analyse 70, et le transmettre au générateur d'ondes 72.

Le générateur d'ondes 72 est configuré pour que la deuxième onde acoustique 74 soit en opposition de phase par rapport à la première onde acoustique 66, une amplitude maximale de la première onde 66 correspondant à une amplitude minimale de la deuxième onde acoustique 74.

Ce déphasage des première et deuxième ondes acoustiques 66, 74 permet de limiter ou d'empêcher un phénomène de résonance sur les pales du rotor 60 de la soufflante 58, limitant les risques de défaillances mécaniques.

Selon un mode de réalisation, l'ensemble de propulsion 40 comprend au moins un capteur 68, 68' situé dans la motorisation 52, plus particulièrement la soufflante 58, et/ou dans l'entrée d'air 46, plus particulièrement au niveau ou à proximité d'au moins une surface aérodynamique de l'entrée d'air 46 parmi les première et deuxième surfaces aérodynamiques S50, S52 de la lèvre 50 et du premier conduit 52.

Selon une configuration, l'ensemble de propulsion 40 comprend plusieurs capteurs 68, 68' positionnés dans des zones distinctes de l'ensemble de propulsion 40. A titre d'exemple, l'ensemble de propulsion 40 comprend au moins un premier capteur 68 situé dans la motorisation 52, plus particulièrement dans la soufflante 58, ainsi qu'au moins un deuxième capteur 68' situé dans l'entrée d'air, plus particulièrement au niveau ou à proximité d'au moins une surface aérodynamique de l'entrée d'air 46 parmi les première et deuxième surfaces aérodynamiques S50, S52 de la lèvre 50 et du premier conduit 52.

Selon un premier agencement, le capteur 68, 68' et le système d'analyse 70 forment un unique élément, comme un transducteur par exemple, configuré pour capter la première onde acoustique 66, la transformer en un signal de commande S76 qui est fonction de la première onde acoustique 66 et transmettre ledit signal de commande S76 au générateur d'ondes 72 qui émet la deuxième onde acoustique 74 à réception du signal de commande S76.

Selon un deuxième agencement, le capteur 68 et le système d'analyse 70 sont deux éléments distincts et distants l'un de l'autre. Selon ce deuxième agencement, chaque capteur 68, 68' est un transducteur configuré pour capter la première onde acoustique 66 et la transformer en un premier signal qui est fonction de la première onde acoustique 66. En complément, le système d'analyse 70 est configuré pour générer, à réception du premier signal provenant du capteur 68, un deuxième signal appelé signal de commande S76 et le transmettre au générateur d'ondes 72 qui émet la deuxième onde acoustique 74 à réception du signal de commande S76.

Selon un premier mode de réalisation, le générateur d'ondes 72 est un générateur d'ondes acoustique configuré pour émettre, en direction de la soufflante 58, une deuxième onde acoustique 74 à réception du signal de commande S76.

Selon un deuxième mode de réalisation, le générateur d'ondes 72 comprend au moins un élément en matériau à mémoire de forme 78 positionné au niveau d'au moins une surface aérodynamique de l'entrée d'air 46 parmi les première et deuxième surfaces aérodynamiques S50, S52 de la lèvre 50 et du premier conduit 52. Cet élément en matériau à mémoire de forme 78 présente une première géométrie lorsque le générateur d'ondes 72 ne reçoit pas le signal de commande S76 et une deuxième géométrie lorsque le générateur d'ondes 72 reçoit le signal de commande S76.

Cet élément en matériau à mémoire de forme 78 est une bande de matière de faible épaisseur, inférieure à 10 mm, présentant une troisième surface aérodynamique S78, orientée vers l'axe de motorisation A42, qui affleure au moins l'une des première et deuxième surfaces aérodynamiques S50, S52 de la lèvre 50 et du premier conduit 52. La troisième surface aérodynamique S78 est espacée de la première ou deuxième surface aérodynamique S50, S52 en direction de l'axe de motorisation A42 d'une distance inférieure à 5 mm.

L'élément en matériau à mémoire de forme 78 peut être intégré dans au moins une paroi aérodynamique de la lèvre 50 et du premier conduit 52 qui présente la première ou deuxième surface aérodynamique S50, S52. Lorsque le premier conduit 52 ou la lèvre 50 comprend un panneau d'atténuation acoustique 64, l'élément en matériau à mémoire de forme 78 peut être intégré dans la couche acoustiquement résistive 64.1 du panneau d'atténuation acoustique 64.

A titre d'exemple, l'élément en matériau à mémoire de forme 78 présente une largeur (dimension prise parallèlement à l'axe de motorisation A42) comprise entre 5 et 20 cm.

Selon une configuration, l'élément en matériau à mémoire de forme 78 s'étend sur au moins une partie de la circonférence de l'entrée d'air 46. Selon un agencement, l'élément en matériau à mémoire de forme 78 s'étend sur au moins la moitié de la circonférence de l'entrée d'air 46 et de préférence sur toute la circonférence de l'entrée d'air 46.

Selon une autre configuration, l'entrée d'air 46 comprend plusieurs éléments en matériau à mémoire de forme 78 répartis sur au moins l'une des première et deuxième surfaces aérodynamiques S50, S52, notamment sur la circonférence de l'entrée d'air 46.

Selon un agencement, l'élément en matériau à mémoire de forme 78 est situé au niveau de la zone de jonction 54 reliant la lèvre 50 et le premier conduit 52, plus particulièrement à cheval sur la lèvre 50 et le premier conduit 52.

La première géométrie de l'élément en matériau à mémoire de forme 78 est déterminée de manière à limiter les perturbations aérodynamiques.

La deuxième géométrie de l'élément en matériau à mémoire de forme 78 est déterminée de manière à ce que ce dernier réfléchisse la première onde acoustique 66 en une deuxième onde acoustique 74, qui se propage approximativement en sens opposé de la première onde acoustique 66 en direction de la soufflante 58, déphasée par rapport à la première onde acoustique 66. Selon une configuration, la deuxième géométrie de l'élément en matériau à mémoire de forme 78 est configurée pour que les première et deuxième ondes acoustiques 66, 74 soient en opposition de phase.

Ce déphasage des première et deuxième ondes acoustiques 66, 74 permet de limiter ou d'empêcher un phénomène de résonance sur les pales du rotor 60 de la soufflante 58, limitant les risques de défaillances mécaniques.

Selon un troisième mode de réalisation visible sur la figure 4, l'élément en matériau à mémoire de forme 78 peut être remplacé par un élément à géométrie variable 80. Dans ce cas, le générateur d'ondes 72 comprend au moins un élément à géométrie variable 80 configuré pour présenter plusieurs géométries (éventuellement plus de deux géométries) différentes en fonction du signal de commande S76 reçu. Comme l'élément en matériau à mémoire de forme 78, l'élément à géométrie variable 80 est positionné au niveau d'au moins une surface aérodynamique de l'entrée d'air 46 parmi les première et deuxième surfaces aérodynamiques S50, S52 de la lèvre 50 et du premier conduit 52. Cet élément à géométrie variable 80 présente une première géométrie lorsque le générateur d'ondes 72 ne reçoit pas le signal de commande S76 et une deuxième géométrie lorsque le générateur d'ondes 72 reçoit le signal de commande S76. A titre d'exemple, le matériau à géométrie variable 80 est réalisé en matériau conformant, ce qui permet d'obtenir une meilleure maîtrise de la phase de la deuxième onde 74 par rapport à un matériau à mémoire de forme.

Selon un premier mode de fonctionnement, la première onde 66 peut être traitée en la combinant avec la deuxième onde 74 avant d'être réfléchie, et ce lorsque la première onde 66 se propage entre sa source (la soufflante 58) et le générateur d'ondes 72 et/ou après avoir été réfléchie par l'élément en matériau à mémoire de forme 78 ou l'élément à géométrie variable 80. Selon un deuxième mode de fonctionnement comme illustré sur la figure 4, la première onde 66 peut être traitée en la combinant avec la deuxième onde 74 lorsque la première onde 66 se propage entre le générateur d'ondes 72 et le bord d'attaque B50 la lèvre 50 avant d'être réfléchie par un élément situé entre le générateur d'ondes 72 et le bord d'attaque B50 la lèvre 50. Dans ce cas, le générateur d'ondes 72 peut aussi bien générer des ondes en direction de la soufflante 58 qu'en sens opposé.

Les premier et deuxième modes de fonctionnement peuvent être combinés.

En présence d'un panneau d'atténuation acoustique 64, le traitement de la première onde 66 en la combinant avec une deuxième onde 74 est configuré de manière à limiter son impact sur le traitement acoustique du panneau d'atténuation acoustique 64.

Bien entendu l'invention n'est pas limitée aux ondes acoustiques et peut s'appliquer à tous types d'ondes.

Quel que soit le mode de réalisation, l'ensemble de propulsion 40 comprend au moins un dispositif activable d'atténuation d'ondes comportant au moins un système d'analyse 70 configuré pour analyser la première onde 66 ou/et au moins une de ses caractéristiques et générer un signal de commande S76, en fonction de l'analyse précédemment faite, ainsi qu'au moins un générateur d'ondes 72 configuré pour, à réception du signal de commande S76, générer une deuxième onde 74, éventuellement en réfléchissant la première onde 66, déphasée par rapport à la première onde 66. Ce dispositif activable d'atténuation d'ondes peut comprendre une boucle d'asservissement configurée pour contrôler le générateur d'ondes 72 en fonction de l'atténuation de la première onde 66.

Bien que décrite appliquée à une entrée d'air, l'invention n'est pas limitée à cette application. Ainsi, l'invention peut s'appliquer à tout ensemble de propulsion d'aéronef qui comprend au moins une motorisation 42 capable de générer au moins une première onde 64 ainsi qu'au moins une surface aérodynamique S50, S52 sur laquelle se propage ladite première onde 64.

## Revendications

1. Ensemble de propulsion d'aéronef comportant une motorisation (42) capable de générer au moins une première onde (66) ainsi qu'au moins une surface aérodynamique (S50, S52) sur laquelle se propage ladite première onde (66), **caractérisé en ce que** l'ensemble de propulsion (40) comprend au moins un dispositif activable d'atténuation d'ondes comportant au moins un système d'analyse (70) configuré pour analyser la première onde (66) ou/et au moins une de ses caractéristiques et générer un signal de commande (S76) ainsi qu'au moins un générateur d'ondes (72) configuré pour, à réception du signal de commande (S76), générer au moins une deuxième onde (74) déphasée et en opposition de phase par rapport à la première onde (66) et **en ce que** le générateur d'ondes (72) comprend au moins un élément en matériau à mémoire de forme ou à géométrie variable (78, 80) positionné au niveau de la surface aérodynamique (S50, S52) de l'ensemble de propulsion, cet élément en matériau à mémoire de forme ou à géométrie variable (78, 80) présentant une première géométrie lorsque le générateur d'ondes (72) ne reçoit pas le signal de commande (S76) et une deuxième géométrie lorsque le générateur d'ondes (72) reçoit le signal de commande (S76), la deuxième géométrie de l'élément en matériau à mémoire de forme ou à géométrie variable (78, 80) étant configurée pour réfléchir la première onde (66) en la deuxième onde (74).

2. Ensemble de propulsion selon la revendication précédente, **caractérisé en ce que** l'ensemble de propulsion (40) comprend une entrée d'air (46) présentant au moins une surface aérodynamique (S50, S52) ainsi qu'au moins un capteur (68), configuré pour capter la première onde (66), situé dans la motorisation (52) et/ou dans l'entrée d'air (46), au niveau ou à proximité de la surface aérodynamique de l'entrée d'air (46).

3. Ensemble de propulsion selon la revendication précédente, **caractérisé en ce que** l'ensemble de propulsion (40) comprend plusieurs capteurs (68, 68') positionnés dans des zones distinctes de l'ensemble de propulsion (40).

4. Ensemble de propulsion selon l'une des revendications 2 à 3, **caractérisé en ce que** le capteur (68, 68') et le système d'analyse (70) forment un unique élément configuré pour capter la première onde (66), la transformer en signal de commande (S76) et transmettre ledit signal de commande (S76) au générateur d'ondes (72).

5. Ensemble de propulsion selon l'une des revendications 2 à 3, **caractérisé en ce que** le capteur (68) et le système d'analyse (70) sont des éléments distincts et distants l'un de l'autre, chaque capteur (68, 68') étant configuré pour capter la première onde (66) et la transformer en un premier signal qui est fonction de la première onde (66), le système d'analyse (70) étant configuré pour générer, à réception du premier signal provenant du capteur (68), le signal de commande (S76) et le transmettre au générateur d'ondes (72).

6. Ensemble de propulsion selon l'une des revendication précédentes, **caractérisé en ce que** l'ensemble de propulsion comprend une entrée d'air (46) qui comporte une lèvre (50), un premier conduit (52) prolongeant la lèvre (50) en direction de la motorisation (42) ainsi qu'une zone de jonction (54) reliant la lèvre (50) et le premier conduit (52) et **en ce que** ledit au moins un élément en matériau à mémoire de forme ou à géométrie variable (78, 80) est situé au niveau de la zone de jonction (54).

7. Aéronef comportant au moins un ensemble de propulsion selon l'une des revendications précédentes.
